Europäisches Patentamt

European Patent Office

Office européen des brevets

(11) Veröffentlichungsnummer: **0 332 803**
**A2**

## EUROPÄISCHE PATENTANMELDUNG

(21) Anmeldenummer: 89100514.2

(22) Anmeldetag: 13.01.89

(51) Int. Cl.⁴: **E01C 11/24 , C08L 95/00**

(30) Priorität: 12.03.88 DE 3808250

(43) Veröffentlichungstag der Anmeldung:
20.09.89 Patentblatt 89/38

(84) Benannte Vertragsstaaten:
AT CH DE FR LI

(71) Anmelder: **VEBA OEL AG**
**Alexander-von-Humboldt-Strasse**
**D-4650 Gelsenkirchen-Hassel(DE)**

(72) Erfinder: **Vonk, Heinz**
**Cromforder Allee 44 a**
**D-4030 Ratingen(DE)**

(74) Vertreter: **Lindner, Wolfgang, Dr.**
**Alexander-von-Humboldt-Strasse Postfach**
**20 10 45**
**D-4650 Gelsenkirchen(DE)**

(54) **Strassenbelag aus einem Asphaltmischgut mit einer eishemmenden Komponente.**

(57) Straßenbelag aus einem Asphaltmischgut mit einer eishemmenden Komponente. Straßenbeläge, die auftauende Substanzen in Form von mit Kunststoff umhüllten verhältnismäßig großen, in das Mineralstoffgerüst eingelagerten Teilchen enthalten, lassen kaum eine homogene Verteilung mit einer gleichmäßigen auftauenden Wirkung zu.

Um die Gebrauchsqualität eines eishemmenden Straßenbelages aus einem Asphaltmischgut mit einem abgestuften Mineralstoffgerüst und einer Mörtelphase auf Basis eines Normenbitumens zu verbessern, setzt sich der eishemmende Zusatz aus einer feingemahlenen Mischung eines thermoplastischen Kunststoffes, eines Alkali- oder Erdalkalichlorids und eines Gesteins- oder Polyurethanmehls zusammen.

EP 0 332 803 A2

## Straßenbelag aus einem Asphaltmischgut mit einer eishemmenden Komponente

Die Erfindung betrifft einen Straßenbelag aus einem Asphaltmischgut mit einem abgestuften Mineralstoffgerüst und einer Mörtelphase, die aus einem Füller, einem Bindemittel aus der Gruppe Normenbitumen sowie einer eishemmenden Komponente besteht.

Das Mineralstoffgerüst einer Asphaltmischung für Straßendeckschichten besteht aus Edelsplitt, Edelbrechsand und/oder Natursand und Gesteinsmehl in unterschiedlicher Körnung. Die Mörtelphase setzt sich aus Füller, z. B. Gesteinsmehl wie Kalkstein, Basaltmehl oder dgl. und dem Bindemittel zusammen.

Um dem Straßenbelag positive Eigenschaften wie eine hohe Verformungsbeständigkeit bei hohen Temperaturen sowie eine geringe Neigung zur Rißbildung bei tiefen Temperaturen zu verleihen, wird der Mörtelphase zusätzlich ein thermoplastischer Kunststoff zugesetzt. Als besonders vorteilhaft haben sich amorphe Polyolefine als Copolymere von α-Olefinen erwiesen (vgl. EP-OS 0 211 103).

Des weiteren gehen die Bemühungen der letzten Jahre dahin, die Bildung von Glatteis und Schneebelägen auf Straßenoberflächen zu verhindern, indem versucht wird, Straßenbeläge herzustellen, die bereits auftauende Substanzen enthalten. So ist zur Herstellung eines Eisbildung hemmenden, Schnee tauenden Straßenbelages der Einsatz eines bituminösen bzw. asphalthaltigen Mischgutes vorgeschlagen worden, das unter anderem mittels einer wasserdichten Umhüllung aus einem trocknenden Öl oder aus einem Kunststoff aus der Gruppe Polyvinylacetat, Polyvinylalkohol, Epoxidharz oder Acrylharz in das Mineralstoffgerüst eingelagerte Halogenid- und Alkalimetallhydroxidteilchen enthält (vgl. DE-PS 24 26 200). Die auftauende Wirkung dieser Teilchen, die eine Teilchengröße von bis zu 7 mm haben, soll sich nach der Zerstörung der Kunststoffumhüllung, die durch den üblichen Abrieb des Straßenbelages bewirkt wird, entfalten.

Ein derartiges Mischgut hat den Nachteil, daß sich die mit trocknendem Öl oder dem Kunststoff umhüllten, verhältnismäßig großen Teilchen bei einer relativ niedrigen Dosierung nur schwierig im Mischgut homogen verteilen lassen und sich die gewünschte auftauende Wirkung allenfalls punktuell einstellt. Darüber hinaus werden infolge der Verkehrseinwirkung die in der Straßenoberfläche eingebetteten verhältnismäßig großen, mit der Umhüllung versehenen Teilchen herausgelöst und hinterlassen dementsprechende Beschädigungen im Straßenbelag.

Der vorliegenden Erfindung lag nun die Aufgabe zugrunde, einen Straßenbelag zu finden, der aufgrund seiner Zusammensetzung die Bildung von Glatteis und Schneebelag verhindert und gleichzeitig eine hohe Gebrauchsqualität der Asphaltdecke sicherstellt.

Diese Aufgabe wird dadurch gelöst, daß die eishemmende Komponente sich aus einer Mischung mindestens eines thermoplastischen Kunststoffes aus der Gruppe der Olefin-Polymerisate und Olefin-Copolymerisate mit einer Schmelzviskosität von 8.000 bis 12.000 mPa s bei 190 °C, eines Alkali- oder Erdalkalichlorids und eines Zusatzes aus der Gruppe Talkum, Zementmehl, Polyurethanmehl oder dgl. zusammensetzt und daß die Mischung zu einem Feinstkorn aufgemahlen ist.

Die Schmelzviskosität bei 190 °C des eingesetzten thermoplastischen Kunststoffes soll vorzugsweise zwischen 8.000 und 12.000 mPa s liegen, damit einerseits die vorteilhaften Eigenschaften der thermoplastischen Fließbarkeit hinsichtlich der größeren Verformungsbeständigkeit bei hohen Temperaturen ohne Gefahr der Rißbildung bei niedrigen Temperaturen zum Tragen kommen und andererseits die für die Aufmahlung der Mischung erforderliche Konsistenz noch vorhanden ist. Besonders geeignet sind beispielsweise ataktisches Polypropylen, ein Copolymer von α-Olefinen, Ethylenvinylacetat oder ein Gemisch der vorgenannten Vertreter.

Die Vermischung der Alkali- oder Erdalkalichloride mit dem in granulatartiger Form oder aufgeschmolzen vorliegenden thermoplastischen Kunststoff erfolgt zweckmäßig in Zwangsmischern bei einer Temperatur zwischen 150 und 190 °C. Je höher die Temperatur ist, umso niedrigviskoser wird der thermoplastische Kunststoff und umso besser läßt er sich mit den Salzpartikeln vermischen. Eine zu hohe Temperatur bedingt jedoch die Gefahr von Zersetzungsreaktionen der eingesetzten Kunststoffe, so daß eine Temperatur zwischen 175 bis 185 °C bevorzugt ist.

Nach intensiver, möglichst vollständiger Benetzung der Salzpartikel mit dem thermoplastischen Kunststoff wird die Mischung auf 10 °C heruntergekühlt und mit dem Zusatz, der einem Verkleben der mit dem Kunststoff benetzten Salzpartikel entgegenwirkt, versetzt. Die Zugabe von Talkum, Zementmehl oder Polyurethanmehl oder dgl. gewährleistet die Rieselfähigkeit der Mischung und begünstigt die Aufmahlung zu einem Feinstkorn, so daß mindestens 80 Gew.-% der Partikel eine Partikelgröße von maximal 90 μm aufweisen.

Die auf diese Weise hergestellte lagerfähige Mischung besteht zu 5 bis 15 Gew.-% aus dem thermoplastischen Kunststoff, zu 80 bis 90 Gew.-% aus dem Alkali- oder Erdalkalichlorid und zu 1 bis 5 Gew.-% aus dem die Rieselfähigkeit der Mischung gewährleistenden Zusatz und macht vorzugsweise 3 bis 5 Gew.-% der Gesamtmasse des Asphaltmischgutes aus.

Die Herstellung des Asphaltmischgutes für die Verwendung im Straßenbau geschieht beispielsweise so, daß die aufgemahlene Mischung aus dem thermoplastischen Kunststoff, dem Alkali- oder Erdalkalichlorid und dem Zusatz aus der Gruppe Talkum, Zementmehl, Polyurethanmehl oder dgl. zunächst bei ca. 170 °C für einige Sekunden mit den Mineralstoffen durchgemischt wird, um die Salzpartikel aus dem Alkali- oder Erdalkalichlorid erneut intensiv zu benetzen, bevor das Bindemittel eingedüst wird. Als Bindemittel kann Bitumen, beispielsweise der Qualität B 80, zugesetzt werden. Durch den Einsatz der den thermoplastischen Kunststoff enthaltenden Mischung wird ein Belagmaterial erzeugt, das hinsichtlich seiner Gebrauchsqualität stark verbessert ist, da der polymermodifizierte Charakter der Asphaltstraßendeckschicht Deformationen durch Verkehrseinwirkung in Form von Spurrillen und Aufschiebungen besser entgegenwirkt.

Die Mischung aus dem thermoplastischen Kunststoff, dem Alkali- oder Erdalkalichlorid und dem Zusatz aus Talkum, Zementmehl, Polyurethanmehl oder dgl. wird völlig gleichmäßig in der Mörtelphase des Asphaltmischgutes verteilt und macht beispielsweise 4 Gew.-% der Gesamtmasse des Asphaltmischgutes aus.

An der Oberfläche des erfindungsgemäßen Straßenbelages tritt eine exotherme Reaktion (Hydrolyse) zwischen dem durch verkehrsbedingten Abrieb freigelegten Alkali- oder Erdalkalichlorid und der durch Eis oder auch Schnee bedingten Feuchtigkeit ein, wodurch bereits ein Taueffekt erzielt wird. Darüber hinaus wird der Gefrierpunkt einer wäßrigen Lösung durch die Anwesenheit der Salze erniedrigt, d. h. die Straßenoberfläche bleibt auch bei Temperaturen im Bereich des Nullpunktes der Celsiusskala eisfrei.

Durch den üblichen Abrieb des Straßenbelages wird bewirkt, daß die auftauende Wirkung in praktisch gleichmäßiger Intensität während der gesamten Lebensdauer des Straßenbelages selber erhalten bleibt, da immer neue, ursprünglich tiefer gelegene, Salzpartikel an die Oberfläche gelangen.

Die Mischung aus dem thermoplastischen Kunststoff, dem Alkali- oder Erdalkalichlorid mit dem weiteren vorgenannten Zusatz kann in Asphaltmischungen, wie z. B. Asphaltbeton oder Splittmastixasphalt, zur Anwendung kommen.

Nachfolgend werden Beispiele für die Herstellung von zwei typischen Zusammensetzungen des erfindungsgemäßen Asphaltmischgutes aufgeführt.

1. Asphaltbeton 0/11

| | | |
|---|---|---|
| Füller (Kalksteinmehl) | 7,0 | Gew.-Teile |
| Diabasbrechsand 0/2 | 34,0 | Gew.-Teile |
| Diabas-Edelsplitt 2/5 | 20,0 | Gew.-Teile |
| Diabas-Edelsplitt 5/8 | 13,0 | Gew.-Teile |
| Diabas-Edelsplitt 8/11 | 22,0 | Gew.-Teile |
| Zusatzstoff (eishemmende Komponente) | 4,0 | Gew.-Teile |
| Bitumen B 80 ($\hat{=}$ 5,9 Gew.-%) | 6,3 | Gew.-Teile |

Die eishemmende Komponente enthielt 9 Gew.-% Ethylen-Propylen-Copolymer, 87 Gew.-% NaCl und 4 Gew.-% Polyurethanmehl.

Die asphalttechnologischen Kenndaten des erfindungsgemäßen Asphaltmischgutes wurden an Marshallprobekörpern ermittelt und sind nachfolgend tabellarisch aufgeführt:

| | | |
|---|---|---|
| Hohlraumgehalt | 2,4 | Vol.-% |
| Stabilität bei 60 °C | 12,3 | kN |
| Fließwert bei 60 °C | 56,0 | 1/10 mm |

2. Splittmastixasphalt 0/11 S

3

| Füller (Kalksteinmehl) | 10,0 | Gew.-Teile |
|---|---|---|
| Basaltbrechsand | 13,0 | Gew.-Teile |
| Basalt-Edelsplitt 2/5 | 12,0 | Gew.-Teile |
| Basalt-Edelsplitt 5/8 | 18,0 | Gew.-Teile |
| Basalt-Edelsplitt 8/11 | 43,0 | Gew.-Teile |
| Zusatzstoff (eishemmende Komponente) | 4,0 | Gew.-Teile |
| Bitumen B 80 ($\hat{=}$ 6,1 Gew.-% B 80) | 6,5 | Gew.-Teile |

Die eishemmende Komponente enthielt 9 Gew.-% ataktisches Polypropylen, 87 Gew.-% NaCl und 4 Gew.-% Polyurethanmehl.

Die ausgeformten Marshallprobekörper aus dem Splittmastixasphalt 0/11 S gemäß dem vorstehenden Beispiel wurden einer Prüfung zur Ermittlung der Eindringtiefe in Anlehnung an DIN 1996, Blatt 13, unter verschärften Bedingungen, nämlich bei 70 °C, unterworfen. Nach einer Einwirkzeit von 5 Stunden wiesen die Marshallprobekörper eine Eindringtiefe von 5,7.1/10 mm auf.

Im Vergleichsversuch zeigen Marshallprobekörper aus dem erfindungsgemäßen Splittmastixasphalt 0/11 S gleich gute Festigkeiten wie Marshallprobekörper aus dem gleichen Splittmastixasphalt 0/11 S ohne Alkali- oder Erdalkalichloridzusatz.

Die Gebrauchsqualität des Straßenbelages aus dem erfindungsgemäßen Asphaltmischgut, worunter beispielsweise Asphaltbeton oder Splittmastixasphalt zu verstehen ist, wird demgemäß durch den Zusatz von Alkali- oder Erdalkalichlorid nicht vermindert, gleichzeitig wird aber Eisbildung auf der Straßenoberfläche wirksam und anhaltend entgegengewirkt und die Schneeräumung erleichtert, ohne daß die sonst übliche Eisschicht unterhalb der Schneedecke hinterlassen wird.

**Ansprüche**

1. Straßenbelag aus einem Asphaltmischgut mit einem abgestuften Mineralstoffgerüst und einer Mörtelphase, die aus einem Füller, einem Bindemittel aus der Gruppe Normenbitumen sowie einer eishemmenden Komponente besteht, dadurch gekennzeichnet, daß die eishemmende Komponente sich aus einer Mischung mindestens eines thermoplastischen Kunststoffes aus der Gruppe der Olefin-Polymerisate und Olefin-Copolymerisate mit einer Schmelzviskosität von 8.000 bis 12.000 mPa s bei 190 °C, eines Alkali- oder Erdalkalichlorids und eines Zusatzes aus der Gruppe Talkum, Zementmehl, Polyurethanmehl oder dgl. zusammensetzt und daß die Mischung zu einem Feinstkorn aufgemahlen ist.

2. Straßenbelag nach Anspruch 1, dadurch gekennzeichnet, daß die Mischung zu 5 bis 15 Gew.-% aus dem thermoplastischen Kunststoff, zu 80 bis 90 Gew.-% aus dem Alkali- oder Erdalkalichlorid und zu 1 bis 5 Gew.% aus dem Zusatz aus der Gruppe Talkum, Zementmehl, Polyurethanmehl oder dgl. besteht und diese nach der Aufmahlung zu 80 Gew.-% aus Partikeln mit einer maximalen Partikelgröße von 90 μm besteht.

3. Straßenbelag nach Anspruch 1, dadurch gekennzeichnet, daß die Mischung 3 bis 5 Gew.-% der Gesamtmasse des Asphaltmischgutes ausmacht.

4. Straßenbelag nach Anspruch 1, dadurch gekennzeichnet, daß der thermoplastische Kunststoff ein ataktisches Polypropylen, ein Copolymer von α-Olefinen, Ethylenvinylacetat oder ein Gemisch der vorgenannten Vertreter ist.